# EUROPÄISCHE PATENTSCHRIFT

(11) **EP 1 614 554 B1**
(45) Veröffentlichungstag und Bekanntmachung des Hinweises auf die Patenterteilung: **08.06.2011**
(21) Anmeldenummer: 05014322.1
(22) Anmeldetag: 01.07.2005
(51) Int. Cl.: B60C 27/12

(54) **Spannelementhalterung für Gleitschutzketten**
Fastening device for a tensioning member of an anti-skid chain
Cadre de support pour un élément de tension d'une chaîne antidérapante

(30) Priorität: 05.07.2004 DE 102004032576
(43) Veröffentlichungstag der Anmeldung: 11.01.2006
(73) Patentinhaber: RUD Ketten Rieger & Dietz GmbH u. Co. KG, 73432 Aalen (DE)
(72) Erfinder:
(74) Vertreter: Grünecker, Kinkeldey, Stockmair & Schwanhäusser Anwaltssozietät

(56) Entgegenhaltungen:
- EP-A- 1 174 292
- DE-A1- 3 427 604
- US-A- 2 012 404
- US-A- 2 192 226
- US-A1- 2002 170 646

## Beschreibung

Die Erfindung betrifft eine Halterung für ein elastisches Spannelement zum Spannen des Laufnetzes einer Gleitschutzkette.

Aus der gattungsbildenden EP 1 174 292 A2 ist eine Halterung der in Betracht gezogenen Art bekannt, die aus einem bogenförmigen Kunststoffgehäse mit zwei Kanälen besteht, von denen einer auf die Seitenkette einer Gleitschutzkette auffädelbar ist und einer zur Aufnahme des einen Endes eines von einem Gummikabel gebildeten, elastischen Spannelementes dient. Sowohl die Montage der bekannten Halterung als auch die endseitige Verankerung des Spannelementes in der Halterung lassen Wünsche offen.

Der Erfindung liegt die Aufgabe zugrunde, eine Halterung der in Betracht gezogenen Art zu schaffen, die sich in problemlos in die äußere Halterung einer Gleitschutzkette integrieren lässt und bei der sich eine feste Verbindung zwischen dem auch hier von einem Gummikabel gebildeten Spannelement und der Halterung erübrigt. Gelöst wird die gestellte Aufgabe erfindungsgemäß dadurch, dass die Halterung von einem Haltebügel mit einem Grundkörper und mehreren mit diesem verbundenen, im Abstand voneinander angeordneten Führungsösen für ein an seinen beiden Enden mit Endbeschlägen versehenes Spannelement gebildet wird.

Weitere Merkmale und Einzelheiten der erfindungsgemäßen Halterung ergeben sich aus den Unteransprüchen und der nachstehenden Beschreibung einer in den beigefügten Zeichnungen dargestellten Ausführungsform der Erfindung. Es zeigen:

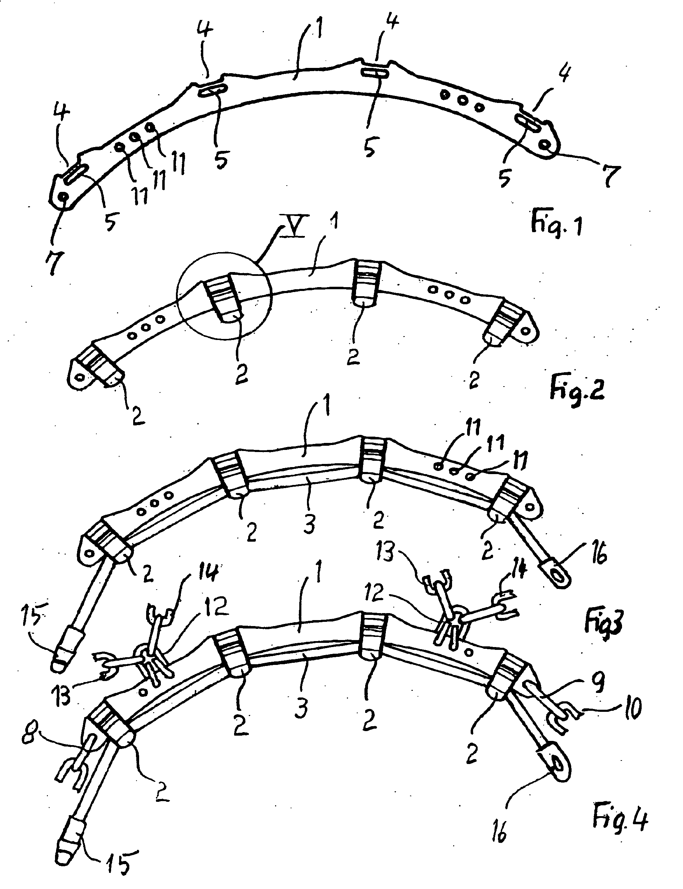

- Fig. 1: den Grundkörper eines Haltebügels,
- Fig. 2: den mit Führungsösen bestückten Haltebügel gemäß Fig. 1,
- Fig. 3: den durch ein Spannelement ergänzten Haltebügel,
- Fig. 4: die Verknüpfung der in Fig. 3 dargestellten Einheit mit dem Laufnetz und der inneren Halterung einer Gleitschutzkette,
- Fig. 5: in vergrößertem Maßstab eine Einzelheit V in Fig. 2,
- Fig. 6: einen Schnitt längs der Linie VI - VI in Fig. 5,
- Fig. 7: die perspektivische Ansicht einer einzelnen Führungsöse und
- Fig. 8: die Innenseite einer aufgeschnittenen Führungsöse gemäß Fig. 7.

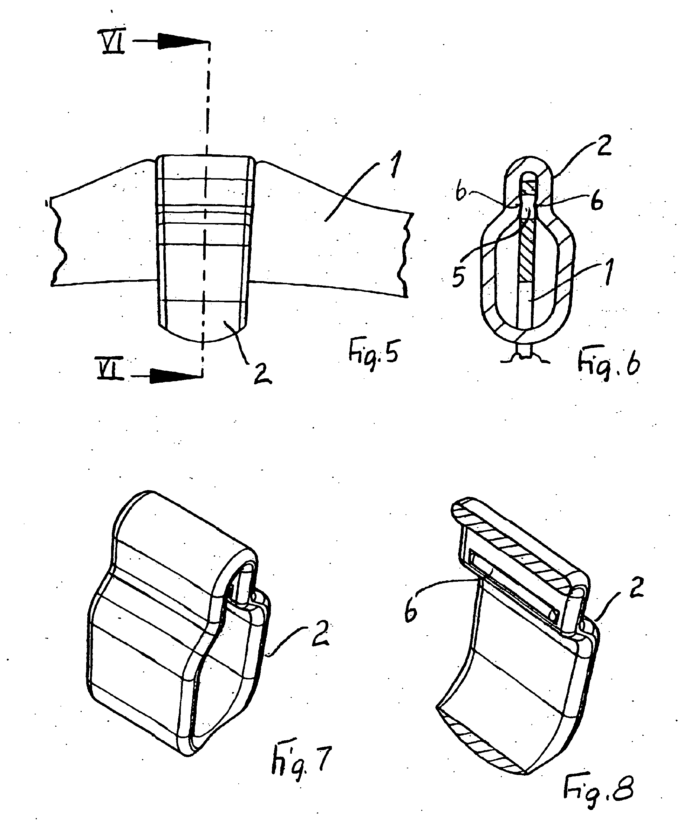

In den Figuren ist 1 der Grundkörper eines mit vier Führungsösen 2 aus Kunststoff ausgestatteten Haltebügels für ein Spannelement 3. Der vorzugsweise als flaches Stanzteil aus einer Stahlblechplatte hergestellte Grundkörper 1 weist im Bereich seines oberen Randes Justiermulden 4 zur Lagebestimmung der Führungsösen 2 auf. Unterhalb der Justiermulden 4 befinden sich Arretierungsschlitze 5 zur Aufnahme von Raststegen 6 an den Innenwänden der Führungsösen 2 (vgl. Fig. 6 und 8). An jedem der beiden Enden des Grundkörpers 1 befindet sich ein Loch 7, in das jeweils ein Endglied 8 bzw. 9 einer einen Teil der inneren Halterung einer Gleitschutzkette bildenden Seitenkette 10 einhäng- oder einschweißbar ist. Im Abstand von den Enden des Grundkörpers 1 ist dieser mit zwei Lochgruppen aus jeweils drei zusätzlichen Löchern 11 versehen, in die Anschlussglieder 12 einhängbar sind, mit deren Hilfe der Grundkörper 1 mit Endgliedern von Kettenstrangabschnitten 13, 14 des Laufnetzes einer Gleitschutzkette verbunden werden kann. Die insgesamt sechs Löcher 11 erleichtem es, den Grundkörper 1 des Haltebügels in Verbindung mit Gleitschutzketten für Fahrzeugreifen unterschiedlicher Durchmesser einzusetzen.

Die unteren Teile der eine im Wesentlichen schlüsselförmige Kontur aufweisenden Führungsösen 2 umschließen ein Spannelement 3, das aus einem mit Endbeschlägen versehenen, umflochtenen Gummikabel besteht. Die Endbeschläge werden im dargestellten Fall von einem Haken 15 und einer Öse 16 gebildet. Beide Enden des Spannelementes 3 lassen sich mit Spannstrangabschnitten einer äußeren Halterung verbinden, es ist aber auch möglich, beispielsweise die Öse 16 über ein Überbrückungsglied an ein Glied der Seitenkette 10 anzuschließen.

## Patentansprüche

1. Halterung für ein elastisches Spannelement zum Spannen des Laufnetzes einer Gleitschutzkette mit einem bogenförmigen Grundkörper (1), **dadurch gekennzeichnet, dass** sie von einem Haltebügel mit dem Grundkörper und mehreren mit diesem verbundenen, im Abstand voneinander angeordneten Führungsösen (2) für ein an seinen beiden Enden mit Endbeschlägen (15, 16) versehenes Spannelement gebildet wird.

2. Halterung nach Anspruch 1, **dadurch gekennzeichnet, dass** die Endbeschläge von Haken (15) und/oder Ösen (16) gebildet werden.

3. Halterung nach Anspruch 1 oder 2, **dadurch gekennzeichnet, dass** die Führungsösen (2) lösbar mit dem Grundkörper (1) des Haltebügels verbunden sind.

4. Halterung nach einem der Ansprüche 1 bis 3, **dadurch gekennzeichnet, dass** der Grundkörper (1) des Haltebügels mit zur Lagebestimmung der Führungsösen (2) dienenden Justiermulden (4) versehen ist.

5. Halterung nach einem der Ansprüche 1 bis 4, **dadurch gekennzeichnet, dass** der Grundkörper (1) des Haltebügels mit Arretierungsschlitzen (5) für Raststege (6) der Führungsösen (2) versehen ist.

6. Halterung nach einem der Ansprüche 1 bis 5, **dadurch gekennzeichnet, dass** der Grundkörper (1) des Haltebügels an seinen Enden Löcher (7) zum Anschluss an Endglieder (8, 9) einer die innere Halterung einer Gleitschutzkette bildenden Seitenkette (10) aufweist.

7. Halterung nach einem der Ansprüche 1 bis 6, **dadurch gekennzeichnet, dass** der Grundkörper (1) des Haltebügels zwei im Abstand voneinander angeordnete Gruppen von Löchern (11) zum Anschluss von Anschlussgliedern (12) für Endglieder von Kettenstrangabschnitten (13, 14) des Laufnetzes einer Gleitschutzkette aufweist.

8. Halterung nach Anspruch 7, **dadurch gekennzeichnet, dass** jede Lochgruppe mindestens drei Löcher (11) aufweist.

9. Halterung nach einem der Ansprüche 1 bis 8, **dadurch gekennzeichnet, dass** der Grundkörper (1) des Haltebügels aus einem Stahlblech-Stanzteil besteht.

10. Halterung nach einem der Ansprüche 1 bis 9, **dadurch gekennzeichnet, dass** die Führungsösen (2) als Kunststoffteile mit einer im Wesentlichen schlüssellochförmigen Innenkontur ausgebildet sind.

## Claims

1. Retainer for an elastic tensioning element for tensioning the chain mesh of an anti-skid chain with an arch-shaped main body (1), **characterised in that** it is formed by a retaining bracket with the main body and several guide eyes (2) disposed at a distance apart from one another connected thereto for a tensioning element provided with terminal fittings (15, 16) at its two ends.

2. Retainer as claimed in claim 1, **characterised in that** the end fittings are provided in the form of hooks (15) and/or eyes (16).

3. Retainer as claimed in claim 1 or 2, **characterised in that** the guide eyes (2) are releasably connected to the main body (1) of the retaining bracket.

4. Retainer as claimed in one of claims 1 to 3, **characterised in that** the main body (1) of the retaining bracket is provided with setting indentations (4) for setting the position of the guide eyes (2).

5. Retainer as claimed in one of claims 1 to 4, **characterised in that** the main body (1) of the retaining bracket is provided with locking slots (5) for catch webs (6) of the guide eyes (2).

6. Retainer as claimed in one of claims 1 to 5, **characterised in that** the main body (1) of the retaining bracket has holes (7) at its ends for connecting to terminal links (8, 9) of a side chain (10) constituting the inner retaining system of an anti-skid chain.

7. Retainer as claimed in one of claims 1 to 6, **characterised in that** the main body (1) of the retaining bracket has two groups of holes (11) spaced at a distance apart from one another for connecting connecting links (12) for terminal links of chain strand portions (13, 14) of the chain mesh of an anti-skid chain.

8. Retainer as claimed in claim 7, **characterised in that** each hole group comprises at least three holes(11).

9. Retainer as claimed in one of claims 1 to 8, **characterised in that** the main body (1) of the retaining bracket is a part punched from sheet steel.

10. Retainer as claimed in one of claims 1 to 9, **characterised in that** the guide eyes (2) are provided in the form of plastic parts with an essentially keyhole-shaped internal contour.

## Revendications

1. Attache pour un élément de tension élastique destiné à tendre le filet de, roulement d'une chaîne antidérapante, avec un corps de base courbe (1), **caractérisée en ce qu'**elle est formée par un étrier de fixation comportant le corps de base et plusieurs oeillets de guidage (2) qui sont reliés à celui-ci, qui sont espacés les uns des autres et qui sont destinés à un élément de tension pourvu à ses deux extrémités des ferrures d'extrémité (15, 16).

2. Attache selon la revendication 1, **caractérisée en ce que** les ferrures d'extrémité sont formées par des crochets (15) et/ou des billets (16).

3. Attache selon la revendication 1 ou 2, **caractérisée en ce que** les oeillets de guidage (2) sont reliés de manière amovible au corps de base (1) de l'étrier de fixation.

4. Attache selon l'une des revendications 1 à 3, **caractérisée en ce que** le corps de base (1) de l'étrier de fixation est pourvu de creux d'ajustement (4) qui servent à définir la position des oeillets de guidage (2).

5. Attache selon l'une des revendications 1 à 4, **caractérisée en ce que** le corps de base (1) de l'étrier de fixation est pourvu de fentes d'arrêt (5) pour des nervures d'encliquetage (6) des oeillets de guidage (2).

6. Attache selon l'une des revendications 1 à 5, **caractérisée en ce que** le corps de base (1) de l'étrier de fixation présente à ses extrémités des trous (7) à relier à des maillons d'extrémité (8, 9) d'une chaîne latérale (10) qui forme l'attache intérieure d'une chaîne antidérapante.

7. Attache selon l'une des revendications 1 à 6, **caractérisée en ce que** le corps de base (1) de l'étrier de fixation présente deux groupes, espacés l'un de l'autre, de trous (11) pour le raccordement de maillons de raccordement (12) pour les maillons d'extrémité de sections de chaîne (13, 14) du filet de roulement d'une chaîne antidérapante.

8. Attache selon la revendication 7, **caractérisée en ce que** chaque groupe de trous présente au moins trois trous (11).

9. Attache selon l'une des revendications 1 à 8, **caractérisée en ce que** le corps de base (1) de l'étrier de fixation se compose d'une pièce découpée en tôle d'acier.

10. Attache selon l'une des revendications 1 à 9, **caractérisée en ce que** les oeillets de guidage (2) sont conçus comme des pièces en matière plastique avec un contour intérieur globalement en forme de trou de serrure.
